# DEMANDE DE BREVET EUROPEEN

(11) **EP 4 567 596 A1**
(43) Date de publication de la demande: **11.06.2025**
(21) Numéro de dépôt: 23214429.5
(22) Date de dépôt: 05.12.2023
(51) Int. Cl.: G06F 9/50

(54) **GESTION DE SERVICE D EXÉCUTION DE LOGICIELS UTILISANT DES VÉHICULES AUTOMOBILES**

(71) Demandeur: Ampere SAS, 92100 Boulogne-Billancourt (FR)
(72) Inventeur: HALLOUIN, Thibault, 78084 Guyancourt cedex (FR); MONDOT, Frederic, 78084 Guyancourt cedex (FR)

(57) **Abrégé**

L'invention concerne un véhicule automobile comprenant une unité de calcul configurée pour exécuter en temps réel des fonctionnalités logicielles embarquées propres au fonctionnement du véhicule automobile, et comportant un module logiciel de supervision configuré pour : envoyer (S1) périodiquement à un centre de données, via une communication sans fil, un état de disponibilité du véhicule automobile; en cas de disponibilité, recevoir et mémoriser (S2) au moins un module logiciel à exécuter et un ensemble de données d'entrée associé, transmis par le centre de données via une communication sans fil; exécuter (S3) le module logiciel pour l'ensemble de données d'entrée, sur une ou plusieurs périodes temporelles déterminées de sorte à ne pas perturber une exécution en temps réel de fonctionnalités logicielles embarquées; et transmettre (S4) le résultat de l'exécution au centre de données.

## Description

### Domaine technique

La présente invention concerne le domaine général des programmes logiciels, et plus précisément la problématique liée aux ressources nécessaires pour l'exécution des programmes logiciels.

### Arrière-plan technologique

Le développement de certains logiciels peut nécessiter une grande capacité de simulation de données avant de pouvoir commercialiser ces logiciels, de manière à garantir leur qualité et leur robustesse. A titre d'exemple non limitatif, dans le domaine du développement d'un logiciel d'aide à la conduite destiné à être embarqué dans un véhicule automobile, il est nécessaire de réaliser, avant commercialisation, des campagnes de validation qui font intervenir généralement un grand nombre de modules logiciels composant le logiciel, ainsi qu'un nombre important d'ensembles de données d'entrée associés à ces modules selon un plan d'exécution prédéfini. Ces campagnes de validation sont très consommatrices en termes de stockage de données et de capacités de calcul.

Par ailleurs, l'emploi de certains logiciels commercialisés peut également nécessiter des campagnes d'exécution de ces programmes logiciels en utilisant un nombre important d'ensembles de données d'entrées selon des plans d'exécution complexes. Ici encore, les campagnes d'exécution requièrent des ressources importantes en termes de stockage et de temps de calcul.

De nombreuses entreprises ou autres organisations ont de plus en plus recours à des centres de données abritant un nombre important de systèmes informatiques interconnectés pour prendre en charge l'exécution de logiciels de plus en plus volumineux dont l'exécution nécessite un grand nombre d'ensembles de données d'entrée selon des campagnes et des plans de validation (ou plus généralement d'exécution) plus ou moins complexes.

Des solutions doivent encore être proposées pour améliorer ces systèmes.

### Résumé de l'invention

L'invention a pour objet un véhicule automobile comprenant une unité de calcul configurée pour exécuter en temps réel des fonctionnalités logicielles embarquées propres au fonctionnement du véhicule automobile, et des moyens de communication configurés pour transmettre et recevoir des données par communications sans fil.

Selon l'invention, l'unité de calcul comporte un module logiciel de supervision configuré pour :
- envoyer S1 périodiquement à un centre de données, via une communication sans fil, un message représentatif d'un état de disponibilité du véhicule automobile, déterminé à partir de paramètres représentatifs d'un état courant du véhicule ;
- recevoir et mémoriser S2, en cas de disponibilité, au moins un module logiciel composant un logiciel à exécuter, au moins un ensemble de données d'entrée associé, transmis par le centre de données via une communication sans fil ;
- exécuter S3, pour ledit au moins un ensemble de données d'entrée, ledit au moins un module logiciel mémorisé, sur une ou plusieurs périodes temporelles déterminées de sorte à ne pas perturber une exécution en temps réel de fonctionnalités logicielles propres au fonctionnement dudit véhicule automobile; et
- transmettre S4 audit centre de données, via une communication sans fil, un ensemble de données de sortie correspondant au résultat de l'exécution dudit au moins un module logiciel.

Selon une caractéristique possible de l'invention, ledit module logiciel de supervision est en outre configuré pour commander S5, après transmission S4 de l'ensemble de données de sortie, la désinstallation dudit au moins un module logiciel et l'effacement local dudit au moins un ensemble de données d'entrée et de l'ensemble de données de sortie.

Selon une caractéristique possible de l'invention, les paramètres représentatifs d'un état courant du véhicule correspondent à un état de marche ou un état d'arrêt du moteur du véhicule, et/ou à un pourcentage de charge d'une batterie du véhicule, et/ou à une information indiquant si la batterie du véhicule est en cours de charge, et/ou une information de géolocalisation du véhicule, et/ou une information représentative d'une bande passante courante allouable pour une communication sans fil.

L'invention a pour autre objet un centre de données pour la gestion d'un service d'exécution de logiciels.

Selon l'invention, le centre de données comporte des moyens de stockage configurés pour stocker au moins un module logiciel composant un logiciel, au moins un ensemble de données d'entrée et au moins un plan de test pour exécuter ledit au moins un module logiciel selon une campagne de test prédéfinie, et un module logiciel de supervision configuré pour :
- recevoir périodiquement S6, via des communications sans fil, des messages représentatifs d'un état de disponibilité transmis par un ou plusieurs véhicules automobiles selon l'invention;
- transmettre S7 à au moins un véhicule automobile disponible au moins un desdits modules logiciels et au moins un ensemble de données d'entrées stockées dans les moyens de stockage ; et
- recevoir S8, via une communication sans fil, un ensemble de données de sortie transmis par ledit véhicule, correspondant à un résultat d'exécution par ledit au moins un véhicule automobile disponible, dudit au moins un desdits modules logiciels transmis après exécution sur ledit au moins un ensemble de données d'entrée.

Selon une caractéristique possible de l'invention, le module logiciel de supervision est en outre configuré pour transmettre audit véhicule automobile, après réception dudit résultat d'exécution, un ordre de désinstallation du module logiciel et d'effacement local des ensembles de données d'entrée et de sortie associés.

L'invention a pour autre objet un système de gestion d'un service d'exécution de programmes logiciels comprenant :
- une flotte de véhicules automobiles selon l'invention ;
- au moins un centre de données selon l'invention.

### Brève description des figures

La description qui va suivre en regard des dessins annexés, donnés à titre d'exemples non limitatifs, fera bien comprendre en quoi consiste l'invention et comment elle peut être réalisée. Sur les figures annexées :
[Fig.1] La [Fig.1] illustre schématiquement des processus d'exécution associés à deux exemples de logiciels ;
[Fig.2] La [Fig.2] représente schématiquement un exemple d'élaboration d'une campagne de test de logiciels ;
[Fig.3] La [Fig.3] illustre schématiquement un système de gestion d'un service d'exécution de logiciels utilisant un centre de données et une pluralité de véhicules automobiles conformes à l'invention;
[Fig.4] La [Fig.4] représente schématiquement une unité de calcul équipant un véhicule automobile selon l'invention;
[Fig.5] La [Fig.5] montre des étapes susceptibles d'être implémentées par une unité de calcul équipant un véhicule automobile selon l'invention ;
[Fig.6] La [Fig.6] montre des étapes correspondantes susceptibles d'être implémentées au niveau d'un centre de données, conformément à l'invention.

### Description de mode(s) de réalisation

Dans les figures, les éléments identiques ou équivalents porteront les mêmes signes de référence.

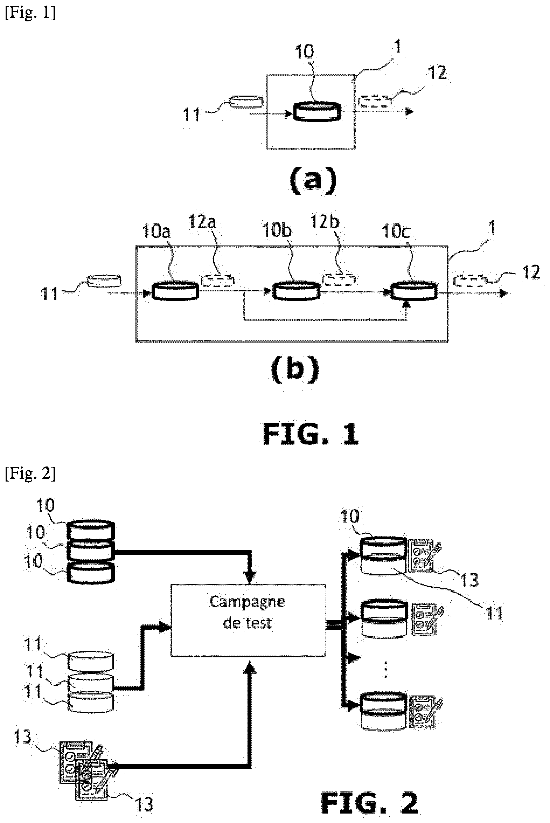

Comme schématisé sur la [Fig.1], un logiciel 1 est composé d'un ou plusieurs modules logiciels 10. Chaque module logiciel 10 comporte un ensemble de séquences d'instructions interprétables par une machine. L'exécution d'un logiciel est le processus par lequel une machine (ordinateur ou machine virtuelle) met en oeuvre les séquences d'instructions sur au moins un ensemble de données d'entrée 11 pour générer un résultat sous forme d'un ensemble de données de sortie 12. A titre d'exemple non limitatif, la vue (a) de la [Fig.1] illustre un logiciel 1 simple composé d'un unique module logiciel 10, lequel génère un ensemble de données de sortie 12 lorsqu'il est appliqué à un ensemble de données d'entrée 11. Sur la vue (b) de la [Fig.1], le logiciel schématisé comporte trois modules logiciels 10a, 10b, 10c qui doivent être exécutés successivement, et pour lequel l'ensemble de données de sortie 12a généré par l'exécution du premier module logiciel 10a constitue l'ensemble de données d'entrée du deuxième module logiciel 10b, et les ensembles de données de sortie 12a, 12b générés par l'exécution des deux premiers modules logiciels 10a, 10b servent d'ensembles de données d'entrée pour le troisième module logiciel 10c.

Comme indiqué précédemment, dans le cadre non limitatif du développement de logiciels, des campagnes de test doivent généralement être menées de manière à s'assurer de la qualité des logiciels. Comme schématisé sur la [Fig.2], une campagne de test consiste à affecter à une ou plusieurs machines de calcul la tâche d'exécuter un ou plusieurs modules logiciels 10 composant un ou plusieurs logiciels à partir d'un ou plusieurs ensembles de données d'entrée 11, et selon un ou plusieurs plans de tests prédéfinis 13. Dans l'exemple non limitatif de la [Fig.2], la campagne de test consiste à affecter à chaque machine d'un ensemble de N machines de calcul, virtuelles ou non (non représentées), un module logiciel 10 à exécuter sur un ensemble de données d'entrée 11 prédéfini, et selon un plan de test 13 prédéfini.

La présente invention repose sur le fait que les véhicules automobiles sont de plus en plus équipés de calculateurs très puissants configurés pour exécuter un certain nombre de fonctionnalités logicielles propres au fonctionnement du véhicule, telles que des assistances diverses à la conduite. Or, la puissance de calcul de ces calculateurs n'est généralement pas utilisée dans sa totalité. En particulier, certaines phases d'utilisation d'un véhicule automobile peuvent avoir peu voire pas recours à l'exécution de certaines fonctionnalités logicielles. L'invention propose en conséquence de se servir du calculateur d'un ou de plusieurs véhicules automobiles appartenant à une flotte prédéfinie à des fins d'exécution à plus ou moins grande échelle de logiciels autres que ceux dédiés au fonctionnement du véhicule.

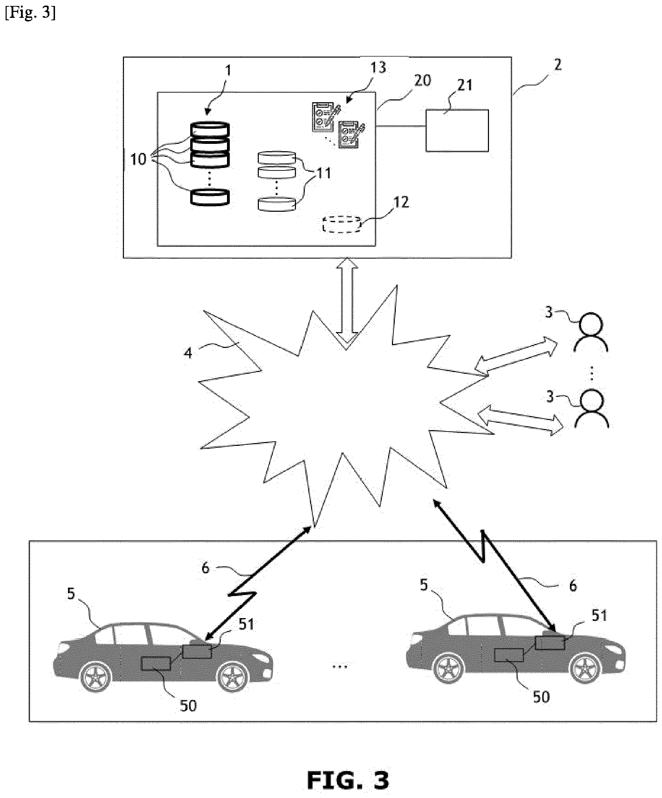

La [Fig.3] illustre schématiquement un exemple de système informatique de gestion d'un service d'exécution de logiciels utilisant un ou plusieurs véhicules automobiles, conformément à l'invention.

Le système comprend un centre de données 2 configuré pour la gestion d'un service d'exécution de logiciels. Ce centre de données 2 comporte des moyens de stockage 20 configurés pour stocker des modules logiciels 10 composant un ou plusieurs logiciels 1, des ensembles de données d'entrée 11 à associer aux modules logiciels pour leur exécution, et des plans de test 13 décrivant les méthodologies à appliquer pour exécuter les modules logiciels 10 lors de campagnes de test prédéfinies. Les modules logiciels 10, les ensembles de données d'entrée 11 et les plans de test 13 ont par exemple été fournis au centre de données 2 par un ou plusieurs utilisateurs 3 du service. Dans un mode de réalisation possible, toutes ces données ont été transmises par un ou plusieurs utilisateurs 3 via un réseau de communication sans-fil par exemple relié à Internet 4. Le centre de données 2 comporte également un module logiciel de supervision 21 dont le rôle est de commander l'exécution, par des calculateurs du système, des modules logiciels 10 selon les ensembles de données 11 et les plans de tests 13 qui leurs sont associés. Ces calculateurs peuvent comporter des serveurs classiques (non représentés) contenus dans le centre de données 2 ou localisés à distance de ce dernier. Conformément à l'invention, au moins un des calculateurs correspond à une unité de calcul 50 embarquée sur un véhicule automobile 5, lequel véhicule comporte également des moyens de communication 51 configurés pour transmettre et recevoir des données par communications sans fil 6 avec le centre de données 2. Sur la [Fig.3], plusieurs véhicules automobiles 5 sont illustrés, dont les unités de calcul 50 constituent autant de calculateurs pour exécuter des modules logiciels conformément à l'invention.

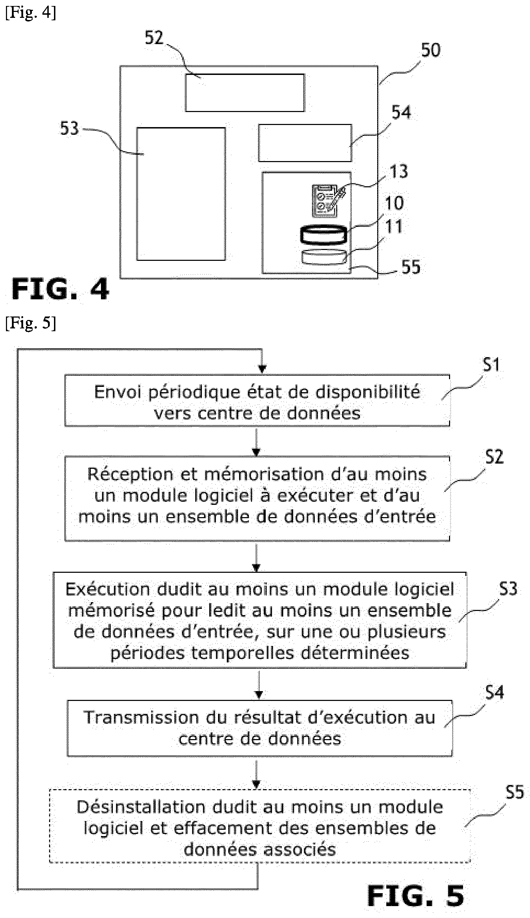

Comme représenté schématiquement sur la [Fig.4], l'unité de calcul 50 d'un véhicule automobile 5 est configurée classiquement pour exécuter en temps réel des fonctionnalités logicielles embarquées 53 propres au fonctionnement du véhicule automobile 5. Ces fonctionnalités sont par exemple des logiciels d'assistance à la conduite associés aux données capturées par différents détecteurs équipant la voiture, et/ou des logiciels de gestion de cycles de charge d'une batterie du véhicule lorsque ce dernier est un véhicule électrique. Pour exécuter ces différentes fonctionnalités, l'unité de calcul 50 peut comporter classiquement un système d'exploitation 52 lui permettant de gérer les différentes fonctionnalités logicielles 53.

Conformément à l'invention, pour que l'unité de calcul 50 puisse être également utilisée comme calculateur dans le cadre du système de la [Fig.3], l'unité de calcul 50 comporte également un module logiciel de supervision 54 apte à gérer, en association avec le centre de données 2, l'exécution de modules logiciels autres que les fonctionnalités logicielles embarquées 53, et ceci sans nuire aux performances de ces fonctionnalités 53.

Plus précisément, l'unité de calcul 50 est dotée d'un algorithme permettant de vérifier que le véhicule automobile 5 qu'elle équipe est disponible pour exécuter tout ou partie d'un logiciel stocké dans le centre de données 2 de notre logiciel. Le terme « disponible » s'entend ici comme signifiant que la phase d'utilisation courante ou qu'une phase d'utilisation prédéfinie à venir du véhicule automobile 5 correspond à une phase au cours de laquelle :
- d'une part, l'unité de calcul 50 n'est pas totalement (voire pas du tout) sollicitée par l'exécution des fonctionnalités logicielles qui sont propres au bon fonctionnement du véhicule, et dispose donc de puissance de calcul et/ou de ressources suffisantes pour exécuter des tâches annexes ;
- d'autre part, que les moyens de communication 51 embarqués sur le véhicule automobile 5 sont bien aptes à recevoir ou transmettre une quantité suffisante de données par communications sans fil.

Ainsi, un état de disponibilité de l'unité de calcul 50 peut dépendre d'un ou plusieurs paramètres représentatifs d'un état courant du véhicule 5. A titre d'exemple non limitatif, un premier paramètre représentatif peut correspondre à un état de marche ou un état d'arrêt du moteur du véhicule. En effet, si le moteur du véhicule est à l'arrêt, on doit considérer que l'unité de calcul 50 n'est pas disponible. Un autre paramètre représentatif peut être composé d'un pourcentage de charge d'une batterie du véhicule lorsque ce dernier est un véhicule électrique, et/ou une information indiquant si la batterie du véhicule est en cours de charge. En effet, un véhicule dont la batterie est en cours de charge n'est pas en condition de roulage, de sorte que les fonctionnalités d'assistance à la conduite ou les fonctionnalités à l'usage courant du véhicule susceptibles d'équiper le véhicule, ne sont pas ou peu sollicitées. Un autre paramètre représentatif peut être une information de géolocalisation du véhicule, éventuellement associée à une planification de trajet sur le véhicule automobile 5, et/ou une information représentative d'une bande passante courante allouable pour une communication sans fil via les moyens de communication 51 du véhicule 5. Un autre paramètre représentatif peut être la détection que le véhicule a une vitesse nulle. Cette situation peut correspondre au cas où le véhicule est dans un bouchon de circulation, auquel cas là encore les fonctionnalités logicielles 53 propres au fonctionnement du véhicule peuvent être peu voire pas sollicitées. D'autres paramètres peuvent encore être envisagés, tels que la marge restante en termes de nombre d'instructions exécutables par secondes (DMIPS), et/ou de mémoire morte et/ou vive associée à l'unité de calcul 50 du véhicule automobile 5.

En cas de disponibilité d'un ou plusieurs véhicules automobiles 5 de la flotte, le module logiciel de supervision 21 du centre de données 2 va pouvoir utiliser les unités de calcul 50 de ces véhicules pour leur affecter des missions d'exécution d'un ou plusieurs modules logiciels 10 composant un ou plusieurs logiciels 1, à partir d'un ou plusieurs ensembles de données d'entrée 11 et selon un ou plusieurs plans de test 13. Par exemple, le module logiciel de supervision pourra affecter un même module logiciel 10 à une pluralité de véhicules automobiles disponibles de la flotte, à exécuter sur des ensembles de données d'entrée différents d'un véhicule à l'autre. En variante non limitative, les modules logiciels 10 composant un même logiciel 1 pourront chacun être affecté à un véhicule automobile disponible de la flotte, avec leur ensemble de données d'entrée et de plan de test associés. Dans certains cas, l'ensemble de données de sortie d'un module logiciel exécuté sur l'un des véhicules automobiles 5 disponibles de la flotte pourra constituer l'ensemble de données d'entrée pour un autre module logiciel dont l'exécution est confiée à un autre véhicule automobile 5 disponible dans la flotte.

Chaque unité de calcul 50 d'un véhicule automobile 5 disponible va alors recevoir le ou les modules logiciels 10, le ou les ensembles de données d'entrées 11 et le ou les plans de test 13 associés qui lui ont été affectés par le centre de données 2. Chaque transmission de données entre le centre de données 2 et un véhicule automobile 5 disponible s'effectue par une communication sans fil 6, par exemple en utilisant un réseau de communication cellulaire, ou une borne wifi publique ou privée auquel les moyens de communication 51 du véhicule automobile 5 ont temporairement accès. Comme illustré schématiquement sur la [Fig.4], les différentes données reçues sont mémorisées dans une mémoire spécifique 55 de l'unité de calcul 50.

Le module logiciel 54 de supervision du véhicule 5 coordonne alors l'exécution du module logiciel 10 mémorisé, sur une ou plusieurs périodes temporelles déterminées de sorte à ne pas perturber une exécution en temps réel de fonctionnalités logicielles propres au bon fonctionnement dudit véhicule automobile 5. A titre d'exemple non limitatifs, ces périodes temporelles peuvent correspondre à des situations prédéfinies que le module de supervision 54 est apte à détecter, telles que :
- le véhicule automobile 5 est arrêté à un feu ;
- le véhicule automobile est stationné, avec son frein à main activé ;
- le véhicule automobile 5 est en cours de charge de sa batterie ;
- et par exemple plus généralement que le véhicule automobile 5 n'est pas dans une phase de roulage.

On peut en outre, ou en combinaison avec les exemples précédents, conduire au préalable des tests sur un véhicule automobile équipé de certaines fonctionnalités logicielles 53, et déterminer ainsi certaines phases de vie du véhicule lors desquelles l'exécution d'un logiciel autre que les fonctionnalités logicielles 53 ne viendra pas introduire des temps de latence dans l'exécution des fonctionnalités logicielles 53 qui risquerait de nuire à la sécurité.

Lorsque l'exécution est terminée, le module logiciel 54 de supervision du véhicule 5 commande la transmission de l'ensemble de données de sortie 12 correspondant au résultat de l'exécution du module logiciel 10 par l'unité de calcul 50 vers le centre de données 2. Ici encore, la transmission de données vers le centre de données 2 s'effectue via les moyens de communication 51 par une communication sans fil 6.

Après transmission de l'ensemble de données de sortie, le module logiciel 54 de supervision peut avantageusement procéder à la désinstallation du module logiciel 10 et l'effacement local de l'ensemble de données d'entrée 11 et de l'ensemble de données de sortie 12 correspondants.

Le module logiciel de supervision 54 est en outre préférentiellement configuré pour permettre une authentification permettant de contrecarrer les possibles attaques extérieures.

Par ailleurs l'installation et/ou l'activation du module logiciel de supervision 54 dans l'unité de calcul 50 d'un véhicule automobile 5 peut être avantageusement soumis à l'accord préalable du propriétaire du véhicule, moyennant éventuellement une contrepartie financière ou autre.

La [Fig.5] résume des étapes susceptibles d'être implémentées par un module logiciel de supervision 54 équipant une unité de calcul 50 d'un véhicule automobile 5, conformément à l'invention :
L'étape S1 correspond à l'envoi périodique d'un message représentatif d'un état de disponibilité/indisponibilité du véhicule automobile 5 au centre de données 2, via une communication sans fil 6. Comme indiqué précédemment, l'état de disponibilité/indisponibilité est déterminé à partir de paramètres représentatifs d'un état courant du véhicule.
L'étape S2 correspond à l'étape de réception, en cas de disponibilité, d'au moins un module logiciel 10 composant un logiciel 1 à exécuter et d'au moins un ensemble de données d'entrée 11 associé, transmis par le centre de données 2 via une communication sans fil 6, et mémorisé après réception dans la mémoire 55.
L'étape S3 correspond à l'étape pendant laquelle le module logiciel de supervision 54 supervise l'exécution du module logiciel 10 reçu et mémorisé, pour l'ensemble de données d'entrée 11 associé également reçu et mémorisé à l'étape S2. Comme vu précédemment, cette exécution est réalisée sur une ou plusieurs périodes temporelles déterminées de sorte à ne pas perturber une exécution en temps réel de fonctionnalités logicielles propres au fonctionnement dudit véhicule automobile 5. A l'issue de cette étape S3, l'unité de calcul 50 dispose d'un ensemble de données de sortie correspondant au résultat de l'exécution.
L'étape S4 correspond à la transmission du résultat d'exécution au centre de données 2.

Après l'étape S4, le module de supervision 54 exécute de préférence une désinstallation du module logiciel 10 et un effacement de toutes les données associées (étape S5). Cette étape peut être par exemple déclenchée par la réception d'un ordre spécifique envoyé au véhicule 5 par le centre de données. En variante, la désinstallation et l'effacement s'effectuent automatiquement au bout d'une durée prédéfinie.

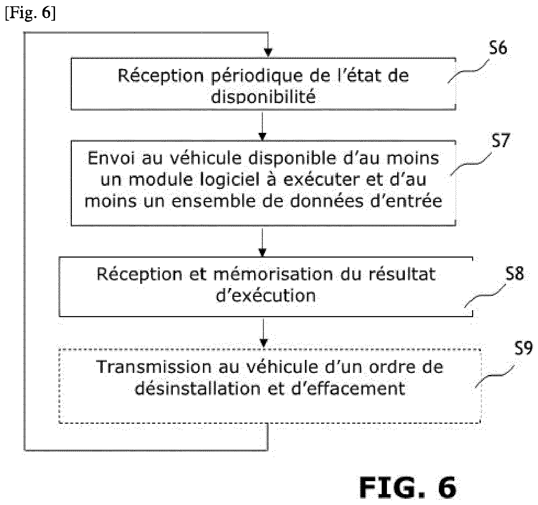

La [Fig.6] résume des étapes susceptibles d'être implémentées par un module de logiciel de supervision 21 équipant un centre de données 2, conformément à l'invention. Pour simplifier, on suppose ici que le centre de données 2 ne coopère qu'avec un seul véhicule automobile 5 conforme à l'invention. Les étapes décrites ci-après sont dans cet exemple en correspondance avec les étapes S1 à S5 décrites précédemment :
A l'étape S6, le module logiciel de supervision 21 reçoit périodiquement le message représentatif d'un état de disponibilité/indisponibilité du véhicule automobile 5 (transmis à l'étape S1 de la [Fig.5]).

En cas de disponibilité du véhicule automobile 5, le module logiciel de supervision 21 transmet à ce véhicule, lors d'une étape S7, au moins un module logiciel 10, au moins un ensemble de données d'entrées 11 et au moins un des plans de test 13 stockés dans les moyens de stockage 20 ([Fig.3]).

A l'étape S8, le module logiciel de supervision 21 reçoit et mémorise le résultat d'exécution (transmis à l'étape S4 de la [Fig.5]).

L'étape S9 correspond à une étape optionnelle lors de laquelle le module logiciel de supervision 21 commande la transmission, après réception du résultat d'exécution, d'un ordre de désinstallation du module logiciel et d'effacement local des ensembles de données d'entrée et de sortie associés, à destination du véhicule automobile.

Un avantage de l'invention est de permettre à un centre de données de gestion d'un service d'exécution de logiciels de pouvoir s'appuyer sur les capacités de calcul d'une flotte de véhicules automobiles en complément ou en remplacement de serveurs actuellement disponibles. Au fur et à mesure de l'agrandissement de la flotte de véhicules, les capacités de calcul augmentent également, réduisant d'autant plus l'attente des résultats.

Un autre avantage de l'invention est son coût principalement limité à un coût de développement logiciel et de chargement/déchargement de données.

La solution de l'invention peut répondre comme on l'a vu précédemment à un besoin premier de validation massif comme celui des logiciels d'aides à la conduite. Néanmoins, cette solution peut être proposée à n'importe quel utilisateur recherchant des capacités de calcul en temps différé.

## Revendications

1. Véhicule automobile (5) comprenant une unité de calcul (50) configurée pour exécuter en temps réel des fonctionnalités logicielles embarquées (53) propres au fonctionnement du véhicule automobile (5), et des moyens de communication (51) configurés pour transmettre et recevoir des données par communications sans fil (6), **caractérisé en ce que** l'unité de calcul (50) comporte un module logiciel de supervision (54) configuré pour :
- envoyer (S1) périodiquement à un centre de données (2), via une communication sans fil (6), un message représentatif d'un état de disponibilité du véhicule automobile (5), déterminé à partir de paramètres représentatifs d'un état courant du véhicule ;
- recevoir et mémoriser (S2), en cas de disponibilité, au moins un module logiciel (10) composant un logiciel (1) à exécuter, au moins un ensemble de données d'entrée (11) associé, transmis par le centre de données (2) via une communication sans fil (6) ;
- exécuter (S3), pour ledit au moins un ensemble de données d'entrée (11), ledit au moins un module logiciel (10) mémorisé, sur une ou plusieurs périodes temporelles déterminées de sorte à ne pas perturber une exécution en temps réel de fonctionnalités logicielles propres au fonctionnement dudit véhicule automobile (5) ; et
- transmettre (S4) audit centre de données (2), via une communication sans fil (6), un ensemble de données de sortie (12) correspondant au résultat de l'exécution dudit au moins un module logiciel (10).

2. Véhicule automobile (5) selon la revendication 1, dans lequel ledit module logiciel de supervision (54) est en outre configuré pour commander (S5), après transmission (S4) de l'ensemble de données de sortie (12), la désinstallation dudit au moins un module logiciel (10) et l'effacement local dudit au moins un ensemble de données d'entrée (11) et de l'ensemble de données de sortie (12).

3. Véhicule automobile (5) selon l'une quelconque des revendications précédentes, dans lequel les paramètres représentatifs d'un état courant du véhicule correspondent à un état de marche ou un état d'arrêt du moteur du véhicule, et/ou à un pourcentage de charge d'une batterie du véhicule, et/ou à une information indiquant si la batterie du véhicule est en cours de charge, et/ou une information de géolocalisation du véhicule, et/ou une information représentative d'une bande passante courante allouable pour une communication sans fil.

4. Centre de données (2) pour la gestion d'un service d'exécution de logiciels, **caractérisé en ce qu'**il comporte des moyens de stockage (20) configurés pour stocker au moins un module logiciel (10) composant un logiciel (1), au moins un ensemble de données d'entrée (11) et au moins un plan de test (13) pour exécuter ledit au moins un module logiciel (10) selon une campagne de test prédéfinie, et un module logiciel de supervision (21) configuré pour :
- recevoir périodiquement (S6), via des communications sans fil (6), des messages représentatifs d'un état de disponibilité transmis par un ou plusieurs véhicules automobiles (5) selon l'une quelconque des revendications 1 à 3;
- transmettre (S7) à au moins un véhicule automobile (5) disponible au moins un desdits modules logiciels (10) et au moins un ensemble de données d'entrées (11) stockés dans les moyens de stockage ; et
- recevoir (S8), via une communication sans fil, un ensemble de données de sortie (12) transmis par ledit véhicule, correspondant à un résultat d'exécution par ledit au moins un véhicule automobile (5) disponible, dudit au moins un desdits modules logiciels transmis après exécution sur ledit au moins un ensemble de données d'entrée.

5. Centre de données (2) selon la revendication 4, **caractérisé en ce que** le module logiciel de supervision (21) est en outre configuré pour transmettre audit véhicule automobile (5), après réception dudit résultat d'exécution, un ordre de désinstallation du module logiciel et d'effacement local des ensembles de données d'entrée et de sortie associés.

6. Système de gestion d'un service d'exécution de programmes logiciels comprenant :
- une flotte de véhicules automobiles (5) selon l'une quelconque des revendications 1 à 3 ;
- au moins un centre de données (2) selon l'une quelconque des revendications 4 à 5.
